# EUROPEAN PATENT APPLICATION

(11) **EP 1 811 751 A2**
(43) Date of publication of application: **25.07.2007**
(21) Application number: 07000711.7
(22) Date of filing: 15.01.2007
(51) Int. Cl.: H04M 1/23, H04M 1/247

(54) **Portable electronic device**

(30) Priority: 18.01.2006 JP 2006010348
(71) Applicant: Casio Hitachi Mobile Communications Co., Ltd., Higashiyamato-shi Tokyo 207-8501 (JP)
(72) Inventor: Fuke, Masatake Casio Hitachi Mobile Communications, Higashiyamato-shi Tokyo 207-8501 (JP); Uesugi, Masaki Casio Hitachi Mobile Communications, Higashiyamato-shi Tokyo 207-8501 (JP); Morita, Hiroshi Casio Hitachi Mobile Communication, Higashiyamato-shi Tokyo 207-8501 (JP); Oota, Yuuichi Casio Hitachi Mobile Communications, Higashiyamato-shi Tokyo 207-8501 (JP); Tanaka, Satoshi Casio Hitachi Mobile Communication, Higashiyamato-shi Tokyo 207-8501 (JP)
(74) Representative: Grünecker, Kinkeldey, Stockmair & Schwanhäusser Anwaltssozietät

(57) **Abstract**

In a foldable cellular phone 100, a cross key 242e is provided on an operating surface of a second casing 2 and a side right-and-left key 203 having the same function as two direction keys of the cross key is provided on one side surface of the second casing. Further, a side up-and-down key 104 having the same function as the other two direction keys of the cross key is provided on a side surface of a first casing that is positioned on the same side as the side right-and-left key 203 when the foldable cellular phone 100 is folded in such a way that the display section 14 faces to the outside.

## Description

The present invention relates to a portable electronic device, and particularly relates to a portable electronic device which comprises a first casing having a display section, and a second casing having an operation section, and in which the first casing can be positioned at the top of the operation section of the second casing, with the display section being exposed.

Among the portable electronic devices, particularly among the cellular phones, there is a foldable cellular phone in which a first casing having a display section and a second casing having an operation section are coupled via a biaxial hinge, so that the body can be folded, either in such a way that the display section faces to the outside or that the display section faces the second casing. For example, in Unexamined Japanese Patent Application KOKAI Publication No. 2005-277627, a cellular phone with a camera function, in which a lens is provided on the back side of a second casing, is disclosed as this kind of foldable cellular phone. In this cellular phone, a shutter button is provided on one side surface of the second casing, and a cross key (four direction keys) and a determination key are provided on the other side surface of the second casing. The cross key and the determination key that are provided on the side surface of the second casing have the same functions as those of a cross key and a determination key that are provided on the operation surface (front surface) of the second casing and that are for performing various setting and change of function. Further, the cross key and the determination key that are provided on a side surface of the second casing have a form or a structure such that their respective correspondence to the cross key and the determination key provided on the operation surface is obvious.

By such configuration, in the cellular phone disclosed in Unexamined Japanese Patent Application KOKAI Publication No. 2005-277627, various setting and change of function can be performed not only in a state where the first casing is opened relative to the second casing, but in a state where the first casing is folded with the display section facing to the outside. Further, camera shooting can be performed in a state where the first casing is folded so that the display section faces to the outside, and the various settings at the time of the camera shooting and the settings involved therein can be performed by the cross key and the determination key provided on the side surface of the second casing.

In a cross key, four key control sections are adjacent with each other and can be controlled by a same finger, thus being useful. However, since the cross key is a complex key in which key tops of four direction keys are coupled and integrated, the cross key itself is large. For that reason, in order to provide the cross key on one side surface of one casing, as in the cellular phone disclosed in Unexamined Japanese Patent Application KOKAI Publication No. 2005-277627, it is necessary that the casing is made thick, and thus there has been a disadvantage that it is impossible to make the body of the cellular phone slim.

This kind of problem arises also when the cross key (four direction keys) is provided on a side surface of respective casings of a nail-clipper-type foldable cellular phone disclosed in Unexamined Japanese Patent Application KOKAI Publication No. 2004-270807, a slide type cellular phone disclosed in Unexamined Japanese Patent Application KOKAI Publication No. 2005-136778, and a rotary type cellular phone disclosed in Unexamined Japanese Patent Application KOKAI Publication No. 2005-109538.

The present invention is made in view of this, and it is an object of the present invention to provide a portable electronic device, in which instruction of four directions can be input, by a same finger, uninterruptedly by means of direction instruction keys provided on one side surface of a portable electronic device, and in which slimming down of the device is realized.

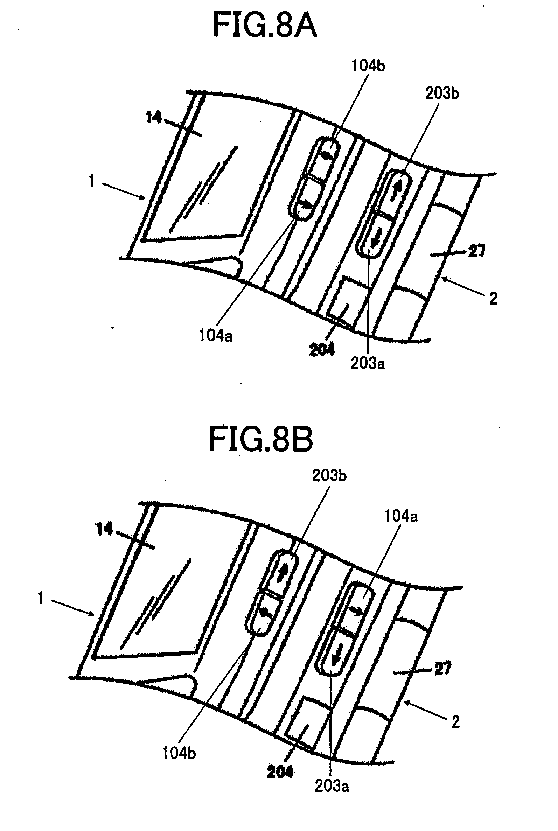

To achieve the above objects, the portable electronic device of the present invention is a portable electronic device including a first casing (1) having a display section (14) and a second casing having an operation section (24), in which the first casing can be positioned at the top of the operation section (24) of the second casing (2) in such a way that the display section is exposed, the portable electronic device comprising:
besides operation keys provided on the operation section,
a first direction instruction key and a second direction instruction key (203a and 203B in FIG. 8A/203a and 104a in FIG 8B), which are provided on one side surface of the second casing so as to be positioned close to each other; and
a third direction instruction key and a fourth direction instruction key (104a and 104b in FIG 8A/203b and 104b in FIG 8B) which are provided on one side surface of the first casing so as to be positioned close to each other, characterized in that
the one side surface of the first casing on which the third and the fourth direction instruction keys are provided is positioned on a same side as the one side surface of the first casing (1) when the fist casing is positioned at the top of the operation section of the second casing (2) in such a way that the display section is exposed, and
the third and the fourth direction instruction keys are provided to be positioned close to the first and second direction instruction keys.

The first casing and the second casing may be coupled via a biaxial hinge having two mutually-perpendicular axes so that the first casing can be folded relative to the second casing either in such a way that the display section faces to the outside or that the display section faces the second casing.

The first casing and the second casing may be coupled via a sliding mechanism so that the first casing can slide on the second casing.

The first casing and the second casing may be coupled via a biaxial hinge having two mutually-perpendicular axes so that the first casing can rotate in a plane relative to the second casing.

The first direction instruction key (203a in FIG. 8A) may be a key for inputting an instruction of a direction, and the second direction instruction key (203b in FIG. 8A) may be a key for inputting an instruction of a direction that is opposite to the direction of the instruction of the first direction instruction key, and
the third direction instruction key (104a in FIG 8A) may be a key for inputting an instruction of a direction, and the fourth direction instruction key (104b in FIG 8A) may be a key for inputting an instruction of a direction that is opposite to the direction of the instruction of the first direction instruction key.

The first direction instruction key (203a in FIG. 8B) may be a key for inputting an instruction of a direction, and the third direction instruction key (203b in FIG. 8B), which is positioned diagonally opposite to the first direction instruction key, may be a key for inputting an instruction of a direction that is opposite to the direction of the instruction of the first direction instruction key, and
the second direction instruction key (104a in FIG. 8B) may be a key for inputting an instruction of a direction, and the fourth direction instruction key (104b in FIG 8B), which is positioned diagonally opposite to the second direction instruction key (104a in FIG 8B), may be a key for inputting an instruction of a direction that is opposite to the direction of the instruction of the second direction instruction key.

The key top sections of the first and the second direction instruction keys that are provided on the side surface of the second casing may be integrated.

The key top sections of the third and the fourth direction instruction keys provided on the side surface of the first casing may be integrated.

These objects and other objects and advantages of the present invention will become more apparent upon reading of the following detailed description and the accompanying drawings in which:
FIG 1 is a perspective view showing a foldable cellular phone 100 being unfolded;
FIG 2 is a front view of the cellular phone 100 in the state of FIG 1;
FIG 3 is a back view of the cellular phone 100 in the state of FIG 1;
FIG 4 is a perspective view showing the foldable cellular phone 100 folded in such a way that the display section 14 faces the second casing;
FIG 5A is a right side view of the cellular phone 100 in the state of FIG. 4;
FIG 5B is a left side view of the cellular phone 100 in the state of FIG 4;
FIG 5C is a left side view of the cellular phone 100 in the state of FIG 4 with an earphone terminal cap 206 and external connecting terminal cap 208 being taken off;
FIG 6A is a perspective view in which the cellular phone 100 is folded in such a way that the display section 14 faces to the outside;
FIG. 6B is an enlarged view of a principal portion of FIG. 6A;
FIG. 7A is a right side view of the cellular phone 100 in the sate of FIG 6A;
FIG 7B is a left side view of the cellular phone 100 in the sate of FIG 6A;
FIG 8A shows another key arrangement of side direction keys;
FIG 8B shows still another key arrangement of side direction keys;
FIG 9A and FIG 9B show an example in which the present invention is applied to a slide type cellular phone;
FIGS. 10A to 10C show examples in which the present invention is applied to a rotary-type cellular phone; and
FIGS. 11A to 11C shows an example in which the present invention is applied to a nail-clipper type foldable cellular phone.

The embodiment of the present invention will be described in the following with reference to the drawings, with a foldable cellular phone, in which a biaxial hinge is used, being taken as an example.

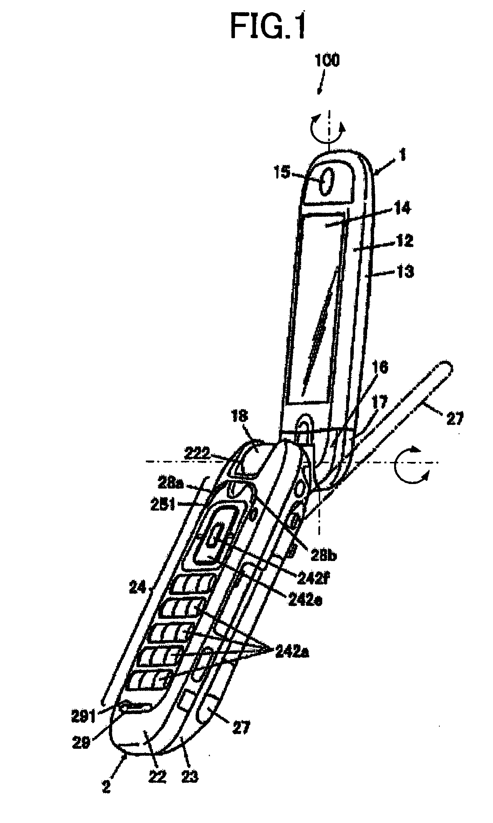

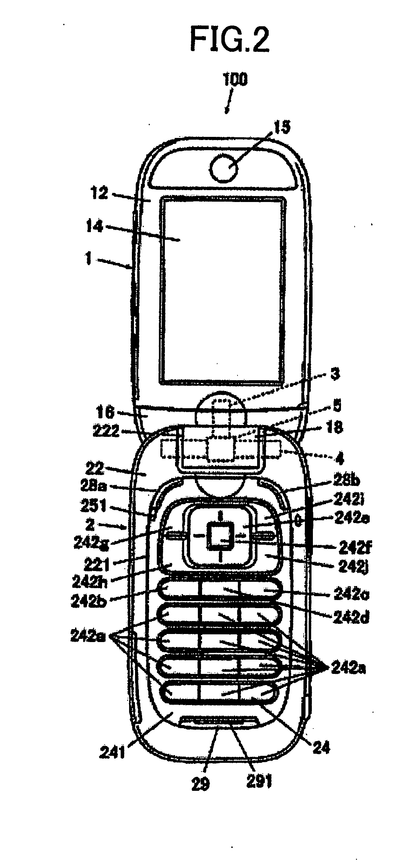

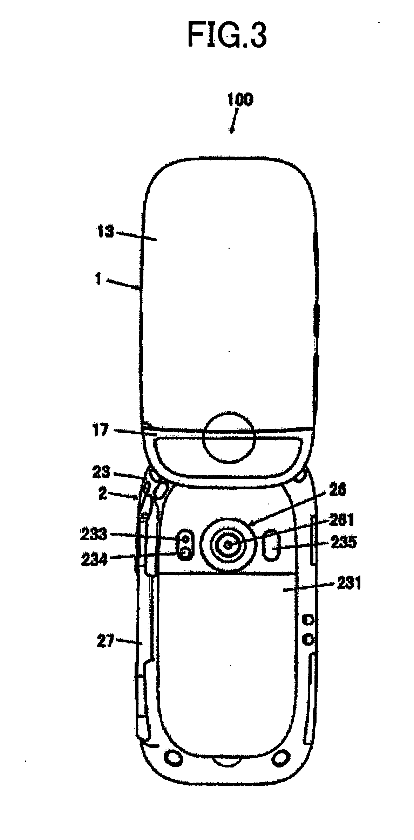

FIG. 1 is a perspective view of a foldable cellular phone 100 in which a biaxial hinge is used, and which has been unfolded. FIG 2 shows the front view in the state of the foldable cellular phone 100 in the state of FIG 1. FIG 3 shows the back view of the FIG 1. The foldable cellular phone 100 comprises a first casing 1 in which a display section 14 is provided and a second casing 2 in which an operation section 24 is provided. The display section 14 is constituted by an electro-optical display device such as a liquid crystal display, and an operation section 24 is constituted by a key pad having a plurality of operating keys. Further, the first casing 1 is coupled to the second casing 2 so as to freely open and close, and to freely pivot, relative to the second casing 2.

The first casing 1 comprises a front case 12 which is positioned inside (in the side of second casing 2) when the cellular phone 100 is folded in the illustrated state, and a rear case 13 which is positioned outside in the state. On the lower end portion of the front case 12 is provided a front hinge case 16. Further, a rear hinge case 17 is provided on the end portion of the rear case 13.

Between the front case 12 and the rear case 13 are stored an electro-optical display device which constitute the display section 14 and an inner case (not shown) that supports a circuit board (not shown), etc., and a speaker 15.

Further, a vertically extending pivot shaft 3, which is to be the axis of rotation when the first casing 1 is pivoted with respect to the second casing 2 in a state where the first casing 1 and the second casing 2 are unfolded, is fixed to the inner case by a first bracket (not shown). To the lower end portion of the pivot shaft 3 is attached a second bracket 5 extending to the side of the second casing 2 perpendicularly to the pivot shaft 3. Opening and closing shaft 4 passes through an end portion extending in the side of the second casing 2 of the second bracket 5. This opening and closing shaft 4 serves as the axis of the rotation at the time of a opening and closing movement of the first casing 1 with respect to the second casing 2. Further, a part of the pivot shaft 3 and a part of the second bracket 5 are covered by the front hinge case 16 and the rear hinge case 17 and cannot be seen from the outside. The remaining portion of the second bracket 5 and the opening and closing shaft 4 are covered by an opening and closing shaft portion front cover 18 and an opening and closing shaft portion rear cover 19 and cannot be seen from the outside.

The second casing 2 comprises a front case 22 which is positioned inside (in the side of first casing 1) when the cellular phone 100 is folded in the illustrated state and a rear case 23 which is positioned outside in the state.

Between the front case 22 and the rear case 23 are stored an inner case (not shown) that supports a circuit board (not shown) on which a main processor which controls the whole of the foldable cellular phone 100, a key pad that constitute an operation section 24 and comprising a plurality of operation keys, a microphone (not shown), a battery (not shown), and a camera unit 26, etc.

The front case 22 is of substantially box shape which is dished so that the side of front face is embossed. On the front face of the front case 22, an aperture section 221 that is of substantially rectangular form in a plan view is formed. This aperture section 221 is for exposing the operating key sections of a key pad.

The key pad, namely the operation section 24, comprises, as control keys, dialing keys 242a, a start-call key 242b, a power/termination key 242c, a memo/clear key 242d, a cross key (four direction keys) 242e, a determination key 242f, an application key 242g, a mail key 242h, an address book key 242i, and an internet connection key 242j. The dialing keys 242a are constituted by ten character-and-number keys, an asterisk key, and a sharp-sign key, which are for inputting telephone number and characters. The start-call key 242b is a key for starting a call and sending an e-mail. The power/termination key 242c is a key for turning the power on and off, and for terminating an active process (termination of calling, etc.) The memo/clear key 242d is a key for performing call memo (phone call recording) and clearing (canceling) characters which has been input. The cross key 242e is a complex key in which key tops of four direction keys (namely an up key, a down key, a right key and a left key) are coupled and integrated, and which is for selecting an item of a menu displayed on the display section 14 and switching the menu (switching the menu displayed on the display section 14 to a menu being superordinate thereto or a menu being subordinate thereto). The determination key 242f is a key for invoking a main menu, and determining the item (namely, a target of setting and a function to be used, etc.) selected by the cross key 242e. The application key 242g is a key for invoking an application menu, which is a sub menu that can be displayed by the operation of the cross key and the determination key, to directly be displayed. The mail key 242h is for invoking a mail menu, which is a sub menu that can be displayed by the operation of the cross key and the determination key, to directly be displayed. The address book key 242i is a key for invoking an address book, which is a sub menu that can be displayed by the operation of the cross key and the determination key, to directly be displayed. The internet connection key 242j is a key for invoking an internet connection menu, which is a sub menu that can be displayed by the operation of the cross key and the determination key, to be displayed.

Further, a cutout 222, which has a rectangular form in a plan view, is formed in the upper end portion of the front case 22 and the rear case 23. Inside the cutout 222 is disposed an opening and closing shaft 4. As described above, the opening and closing shaft 4 is covered by the opening-and-closing-shaft-portion front cover 18 and the opening-and-closing-shaft-portion rear cover 19 and cannot be seen from the outside.

The rear case 23 is of substantially box shape which is dished so that the side of back face is embossed. On the bottom face of the rear case 23, an aperture section, which allows a battery stored inside the second casing 2 to be removed, is formed. The aperture section is covered by a battery cover 231. Further, a lens section 261, and a lamp 233 that lights up or flashes on the activation of camera and on shooting, of a camera unit 26 housed inside the second casing 2, an illuminating light 234 for shooting, and an infrared communication port 235 for infrared communication, etc. are exposed on the bottom face of the rear case 23.

The inner case of the second casing 2 is formed of magnesia alloy, etc. The opening and closing shaft 4 is attached to the upper end portion of the inner case of the second casing 2 by a bracket that is not shown.

Further, on the side of the back face of the inner case of the second casing 2, there are assembled a circuit board, which is not shown, and on which a main processor, a memory, a modem, a TV tuner, and a power IC, etc., are provided. A key substrate is assembled on the side of the front face of the inner case of the second casing 2. On the key substrate, thin pressure type switches which have a movable contact and a fixed contact, like dome switch, are provided to be individually be associated with the plurality of operation keys 242a - 242j. The cross key 242e is a complex key in which key tops of four direction keys are jointed and integrated, and therefore in cross key 242e, four pressure type switches are provided to individually be associated with the direction keys.

On a front surface of a key substrate is provided a key pad having a plurality of operation keys 242a to 242j. The key pad comprises a base rubber pad (not shown) in which protrusion sections which constitute push button sections of the respective operation keys are integrally formed, an inner flame 241 that covers the front face of the base rubber pad except for the protrusion sections, and key tops attached to the ends of the protrusion sections. The inner flame 241 is made of a metal plate, such as a stainless plate, and serves as a reinforcing plate and as a decorative plate. Further, the inner flame 241 is formed to be larger than the aperture section 221 formed on the front case 22, and the peripheral portions thereof are covered by the front case 22.

Further, in the upper left corner portion and upper right corner portion of the inner flame 241, there are formed first protrusion sections 28a and 28b arcuately protruding respectively along the upper left and the upper light corner portions. The first protrusion sections 28a and 28b are for preventing the unsteadiness of each of the casings 1 and 2 caused at the time when the first casing 1 and the second casing 2 are folded, by the pivot shaft 3 and the opening and closing shaft 4. Further, in the neighborhood of the first protrusion section 28a provided on the upper left corner portion, a microphone hole 251 is formed in the upper left corner portion, more specifically in the basal portion, in the opposite side with respect to the opening and closing shaft 4, of the first protrusion section 28a. The microphone hole 251 is formed to penetrate the inner flame 241. On the back side of the microphone hole 251, a microphone that is not shown is installed. Therefore, even if a finger of the caller is put on the neighborhood of the microphone hole 251, a gap is formed between the first protrusion section 28a and the finger, by the finger's contact on the first protrusion section 28a. This eliminates finger's obstruction of the microphone hole 251.

Further, in the center of the lower end portion of the inner flame 241, a second protrusion section 29 protruding linearly and extending from side to side is formed. The second protrusion section 29 is for preventing unsteadiness of the casings 1 and 2 at the time when the first casing 1 and the second casing 2 are folded. In the neighborhood of the second protrusion section 29, a radiating slot 291 for radiating heat generated within the second casing 2 is formed.

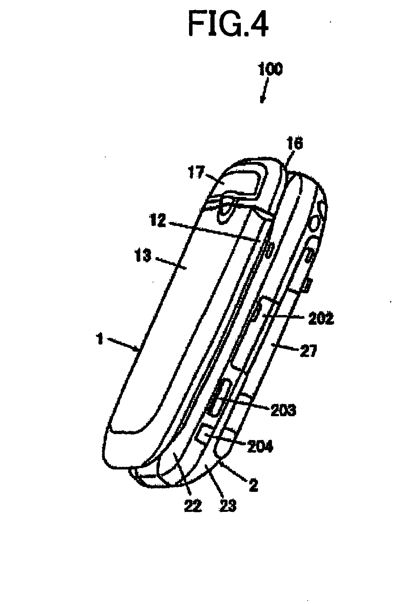

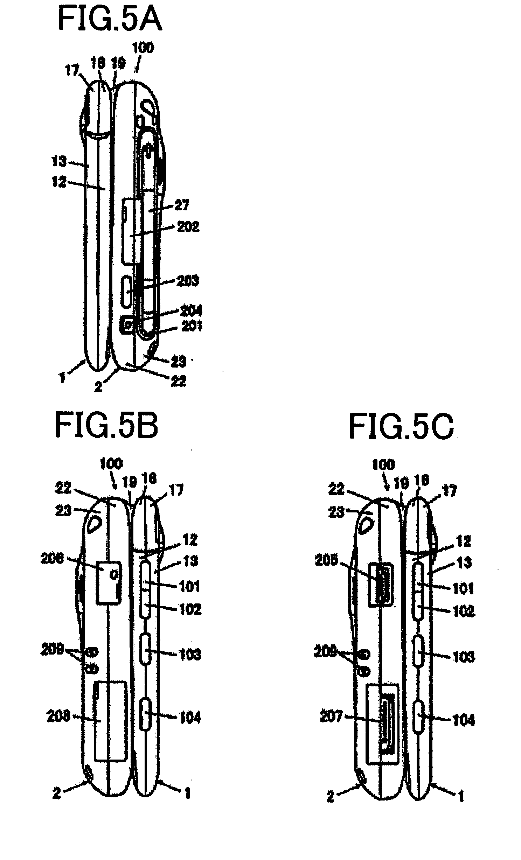

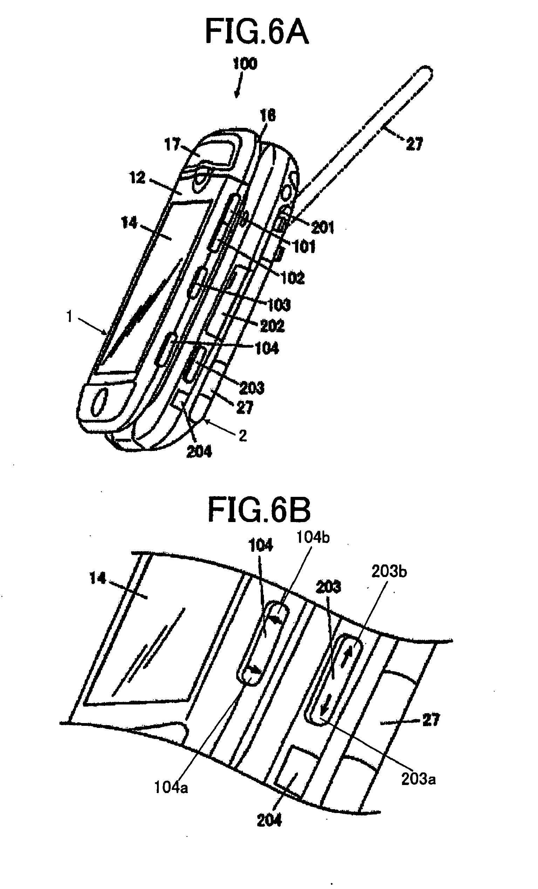

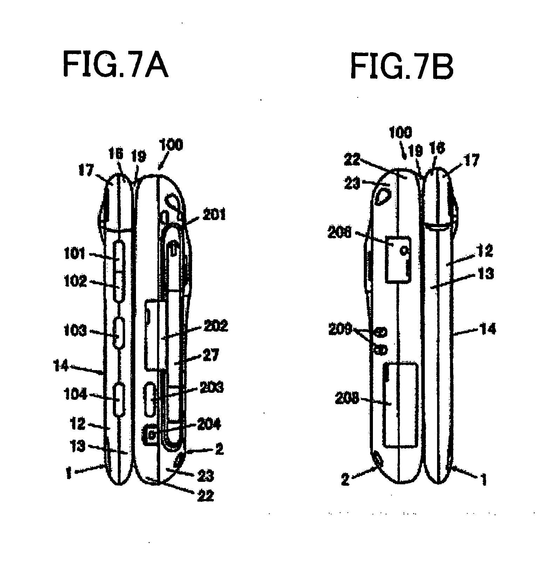

FIG 4 is a perspective view showing the cellular phone 100 folded so that the display section 14 faces the second casing 2. FIG. 5A is right side view in the state of FIG 4. FIG 5B is a left side view in the state of FIG 4. FIG 5C is a left side view of the state of FIG. 4 at the time when an earphone terminal cap 206 and an external connecting terminal cap 208 are removed. FIG 6A is a perspective view showing a state in which the cellular phone 100 is folded in such a way that the display section 14 faces to the outside. FIG. 6B is an enlarged view of the principal part of FIG. 6A. FIG 7A is a right side view in the state of FIG 6A. FIG 7B is a left side view of the state of FIG 6A.

On the right side surface of the first casing 1 (see FIG 7A) in the state where the cellular phone is folded in such a way that the display section 14 of the first casing 1 faces to the outside, as shown in FIG 6A, there is provided a manner key 101, a side determination key 102, a TV key 103, and a side up-and-down key (a two-direction key for the first casing) 104. The manner key 101 is a key for setting or resetting a silent mode in which getting an incoming call or an e-mail is notified by a small sound and/or vibration. The side determination key 102 has the same function as the above-described determination key 242f has. In other words, the key is for invoking the main menu and determining an item selected by the cross key 242e (namely a target to be set and a function to be used). TV key 103 is a key for starting up a TV mode. Side up-and-down key 104 has the same function as that of the up key and the down key, of the above-described cross key 242e. That is, for example, when a menu listing items of functions is displayed on the display section 14, a desired function can be selected by the up-and-down key 104. The function selected by the side up-and-down key 104 is determined by the above-mentioned side determination key 102 or a later-described side right-and-left key 203. Further, in the TV mode, the volume can be controlled by the side up-and-down key 104. Further in the camera mode (on shooting), the brightness of the displayed image can be adjusted by the side up-and-down key 104.

Further, on the right side surface of the second casing 2 in the state where the cellular phone is folded so that the display section 14 faces to the outside (see FIG 7A), namely on the right side surface of the rear case 23, a storage section 201 in which the TV antenna 27 is to be stored is formed along the longitudinal direction of the second casing 2. Then, the TV antenna 27 is stored in the storage section 201. Still further, on the right side surface of the front case 22, a memory card slot 202, a side right-and-left key (a two direction key for the second casing) 203 and a shutter key 204 of the camera are provided. The side right-and-left key 203 has the same function as the left key and the right key of the above-described cross key 242e have. That is, for example, the side right-and-left key 203 enables a user, when a menu of items of setting, or a menu of items of the functions is displayed on the display section 14, to return to the menu of the next upper layer and to go forward to a menu of the next lower layer (in other words, a sub menu of the item selected in the menu having been displayed). Further, on the TV mode, the side right-and-left key 203 enables to switch the channels. Still further, zoom adjustment can be performed by the side right-and-left key 203 on the camera mode (on shooting). The shutter key 204 serves as a shutter button when the camera mode is activated, while it serves as a key for activating the camera mode when the camera mode is not activated.

The side up-and-down key 104 is a key with two contact points in which an up key section 104a and a down key section 104b extend along the side surface of the first casing 1. The side right-and-left key 203 is a key with two contact points in which the right key section 203a and the left key section 203b extend along the side surface of the second casing 2.

The side up-and-down key 104 and the side right-and-left key 203 are arranged respectively on the side surface of the first casing 1 and the side surface of the second casing 2 in such a way that, when the first casing 1 and the second casing 2 are folded with the display section 14 facing to the outside, the side up-and-down key 104 and the side right-and-left key 203 are positioned close to each other.

The side up-and-down key 104 and the side right-and-left key 203 are arranged on the different side surfaces when the cellular phone 100 is folded in such a way that the display section 14 faces the second casing 2, as shown in FIG 5A and FIG 5B.

Further, on the left side surface of the second casing 2 in the state where the cellular phone 100 is folded as shown in FIG 4 in such a way that the display section 14 faces the second casing 2 (see FIG 5B and FIG 5C), there is provided an earphone terminal 205, an external connecting terminal 207, and charging terminal 209. To the earphone terminal 205, a flat type stereo earphone is connected. An earphone terminal cap 206 is attached to the earphone terminal 205. The external connecting terminal 207 is used for the connection of a USB cable or the like. To the external connecting terminal 207, an external connecting terminal cap 208 is attached. The charging terminal 209 is provided between the earphone terminal 205 and the external connecting terminal 208, and is used at the time of charging using a desk-top holder.

Next, an explanation is given of the operation of the foldable cellular phone 100.

As described above, the foldable cellular phone 100 comprises an opening and closing shaft 4 that allows the first casing to be opened and closed relative to the second casing, a pivot shaft 3 that allows the first casing to pivot relative to the second casing in a state where the first casing and the second casing are opened relative to each other. Further, though not being shown in the drawings, the foldable cellular phone 100 comprises a switch that detects rotation of the first casing, and a switch that detects open and close of the first casing. Then, in accordance with the status of detection of the two switches, the four positions which the foldable cellular phone 100 can be in can be detected. The four positions include a position in which the cellular phone 100 is folded in such a way that the display section 14 faces the second casing 2 as shown in FIG. 4, a position in which the first casing 1 is opened relative to the second casing 2 as shown in FIG 1, a position in which the first casing 1 is turned through 180 degree so that the display section 14 faces the outside, from the opened position shown in FIG. 1, and a position in which the cellular phone 100 is folded with the display section 14 facing the outside as shown in FIG 6. Further, in accordance with the four positions, turning-on-and-off of the display section 14, the orientation of the display screen of the display section 14, and enabling or disabling of the operation keys 242a to 242j, 101 to 104 and 203, and 204 are switched and set.

In the state in which the foldable cellular phone 100 is folded, as shown in FIG 4, in such a way that the display section 14 faces the second casing, the operation section 24 provided on the front face of the second casing 2 is covered by the first casing 1. Further, as shown in FIGS. 5A and 5B, the side up-and-down key 104 is provided on the left side surface of the first casing 1, and the side right-and-left key 203 is provided on the right side surface of the second casing 2. In this position, the display section 14 is set to be turned off, and operation keys except for the manner key 101 are disabled.

When the foldable cellular phone 100 is opened, with the opening and closing shaft 4 taken as the center, as shown in FIG 1, the display section 14 and operation section 24 are exposed. Therefore, the operation keys 242a to 242j arranged on the front face of the second casing 2 can be pressed down, and thus a desired operation can be performed. For example, by operating the dialing keys 242a and the start-call key 242b, a user can make a call and send an e-mail. Further, by operating the cross key 242e and the determination key 242f, a user can activate the TV mode, the camera shooting mode, and shot image playback mode, etc. Further, during the activation of the TV mode, tuning a channel from another and adjustment of the volume can be performed by the cross key 242e. Further, during the activation of the camera shooting mode, zoom adjustment can be performed by the cross key 242e, and imaging can be performed by the determination key 242f.

Further, it is possible to fold the foldable cellular phone 100 into the position shown in FIG 6A with the opening and closing shaft 4 as the axis, after turning the first casing 1 through 180 degree about the pivot shaft 3 as the axis so that the display section 14 faces the outside, from the position shown in FIG. 1 in which the foldable cellular phone 100 is opened. In the state where the foldable cellular phone 100 is folded so that the display section 14 faces the outside, the side up-and-down key 104 is positioned on the right side of the first casing 1 as shown in FIG. 6A and FIG 7A, and the side right-and-left key 203 is positioned on the right side surface of the second casing 2. In other words, the side up-and-down key 104 and the side right-and-left key 203 are positioned so that operation can be done by a single finger, in the same way as the case of the cross key 242e provided on the operation section 24 of the second casing 2. Further, in this position, the keys of the operation section 24 are disabled, but, the side keys 101 to 104,203 and 204 are all enabled.

Accordingly, a user can select and activate a desired function by operating of the side up-and-down key 104, side right-and-left key 203 and the side determination key 102 without opening the first casing 1 as shown in FIG 1 and operating the cross key 242e, etc. provided on the operation section 24 of the second casing 2. The TV mode can be activated also by the operation of the TV key 103. Further, the camera mode (shooting mode) can also be activated by the operation of the shutter key 204.

Further, in the position in which the foldable cellular phone 100 is folded in such a way that the display section 14 faces to the outside, the orientation of the display screen is switched so that the side surface, to which the side keys 101 to 103, 203 and 204 is provided, becomes the upper side of the display screen, and the display screen becomes long sideways. Accordingly, the display screen is easily viewable at the time of a user's TV watching, camera shooting, browsing a web page, displaying a map, etc. Further, all of the side keys can be operated, in a state in which the foldable cellular phone 100 is held with both hands, by any one of the right and left forefingers. Thus the operation of the side keys is easy.

According to the above-described embodiment of the present invention, when the first casing 1 is closed so that the display section 14 faces to the outside, the side up-and-down key 104 and the side right-and-left key 203 are positioned to be closer to each other, on the surfaces of the same side of the first casing 1 and the second casing 2. This enables a user, similarly to the case of the cross key 242e, to operate the four sections of the direction keys, which are constituted by the up key section 104a and the down key section 104b of the side up-and-down key 104, and the right key section 203a and the left key section 203b of the side right-and-left key 203.

Further, since the side up-and-down key 104 and the side right-and-left key 203 are dividedly provided to the side surfaces of the first casing 1 and the second casing 2, respectively, key contact points can be sufficiently spaced apart from each other. This makes it easy to arrange the keys, and makes it possible to prevent erroneous operation. Further, since there is no necessity of increasing the thickness of the first casing 1 and the second casing 2 for the intention of securing the distance between the key contact points, it becomes possible to make the cellular phone 100 slim.

The embodiment of the present invention is not limited to the above-described one, and can be suitably modified so long as such modifications do not go beyond the scope of the present invention.

For examples, it has been described that the side up-and-down key 104 is a key with two contact points. However, it is possible to divide the side up-and-down key 104 into a side up key and a side down key so that each has one contact point, and to provide the keys so that the keys are positioned close to each other. Further, similarly, the side right-and-left key 203 can also be divided into a side left key and a side right key so that each has one contact point, and it is possible to provide the keys so that the keys are positioned close to each other. In other words, as shown in FIG 8A, it is possible to provide the side up key 104a and the side down key 104b on the side surface of the first casing 1 so that the keys come close to each other, and to provide the side right key 203a and the side left key 203b on the side surface of the second casing 2 so that the keys come close to each other.

Further, only side up-and-down key 104 may be configured to be a key with two contact points and side right-and-left key 203 may be divided into a side left key and a side right key. Only the side right-and-left key 203 may be configured to be a key with two contact points, and the side up-and-down key 104 may be divided into a side up key and a side down key.

Further, the keys may be arranged so that the side up key 104a and the side down key 104b are arranged diagonally with respect to each other, and the side right key 203 a and the side left key 203b are arranged diagonally with respect to each other. That is, as shown in FIG. 8B, the side down key 104b and the side left key 203b may be arranged on the side surface of the first casing 1 so that the keys are positioned close to each other, and the side up key 104a and the side right key 203a may be arranged on the side surface of the second casing 2 so that the keys come close to each other. In this key arrangement, the side down key 104b and the side left key 203b may be a key with two contact points in which key tops are integrated. Further, similarly, the side up key 104a and the side right key 203a may be a key with two contact points in which the key tops are integrated.

Further, it has been described that the side up-and-down key 104 has the same function as those of the up key and the down key of the cross key 242e, and that the side right-and-left key 203 has the same function as those of the left key and the right key of the cross key 242e. However, the function of the side up-and-down key 104 and the function of the side right-and-left key 203 may be replaced with each other.

Further, the side up-and-down key 104 and the side right-and-left key 203 are provided to one side closer to one edge that becomes the free edge, at the time of the opening and closing, of the first casing 1. However, the side up-and-down key 104 may be provided to one side closer to the pivot shaft 3 and the opening and closing shaft 4 (the side of the fixed edge). In this case, first casing 1 or the second casing 2 is more stabilized at the time when the side up-and-down key 104 and the side right-and-left key 203 are operated, and the operativity is improved.

Further, in the structure of the above-described embodiment, the manner key 101, the side determination key 102, and the TV key 103 are provided on the side surface of the first casing 1, and the shutter key 204 is provided on the side surface of the second casing 2. However, these keys may be provided on the side surface of either of the casings.

Still further, the first casing 1 and the second casing 2 may be structured so that only direction keys are provided on the side surfaces thereof. In the above embodiment, the main menu is displayed by the side determination key 102, and the item selected by the side up-and-down key 104 is determined by the side determination key 102. However, it is possible, for example by the right key of the side right-and-left key 203, to display main menu and determined the selected item.

Further, in the above embodiment, the present invention is applied to the foldable cellular phone 100. However, it is possible to apply the present invention to a cellular phone of another shape.

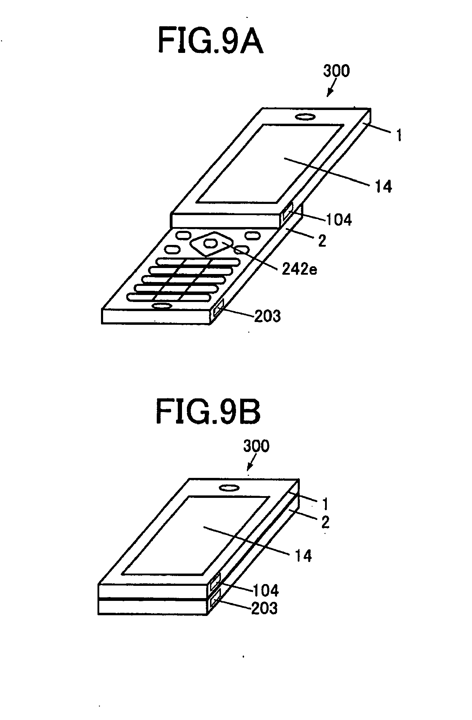

For example, the present invention can be applied to a slide type cellular phone 300 shown in FIGS. 9A and 9B. The slide type cellular phone 300 is a cellular phone in which the first casing 1 and the second casing 2 are coupled via the sliding mechanism, so that the first casing 1 slides on the operation section of the second casing 2. Accordingly, it is possible to slide the first casing 1 from the opened position shown in FIG 9A to the closed position shown in FIG 9B.

As shown in FIG 9A, the slide type cellular phone 300 comprises the cross key 242e, similarly to the foldable cellular phone 100. Then, as shown in FIG. 9B, even in the position in which the cellular phone 300 is closed with the display section 14 facing the outside, the side up-and-down key 104 and the side right-and-left key 203, which have the same function as the cross key 242e has, are positioned close to each other. This makes it easy to operate the keys in the same way as the cross key 242e even in the position in which the cellular phone 300 is closed.

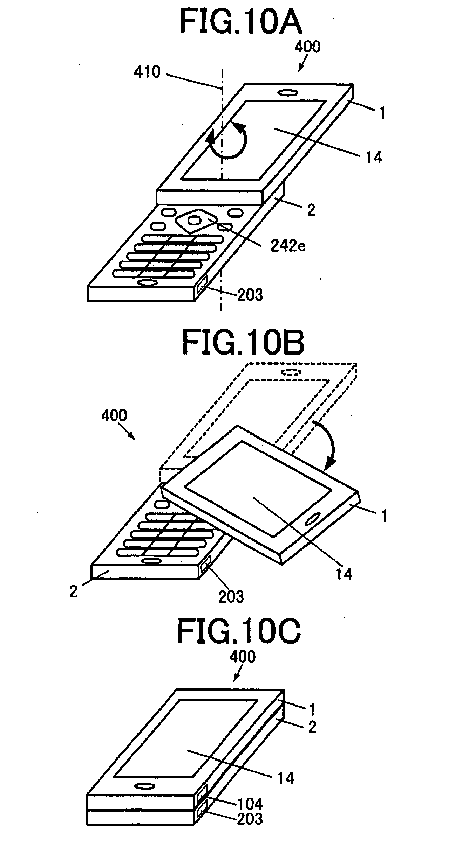

Further, it is possible to apply the present invention to the rotary type cellular phone 400 shown in FIGS 10A to 10C. The rotary type cellular phone 400 is a cellular phone in which a first casing 1 and a second casing 2 are coupled with a pivot shaft extending in the thickness direction of the casing, so that the first casing 1 rotates about the pivot shaft, on the operation section of the second casing 2. Accordingly, the first casing 1 can be rotated, as shown in FIG 10B, about the shaft center 410, from the opened position shown in FIG 10A, to be in the closed position shown in FIG 10C. As shown in FIG. 10A, the rotary type cellular phone 400, similarly to the foldable cellular phone 100, comprises a cross key 242e. Then, as shown in FIG 10C, the key arrangement of the rotary type cellular phone 400 is configured so that even when the rotary type cellular phone 400 is closed with the display section 14 facing the outside, the side up-and-down key 104 and the side right-and-left key 203 having the same function as the cross key 242e are positioned to be close to each other. This makes it easy to operate the keys in the same way as the cross key 242e even in the position in which the cellular phone 400 is folded.

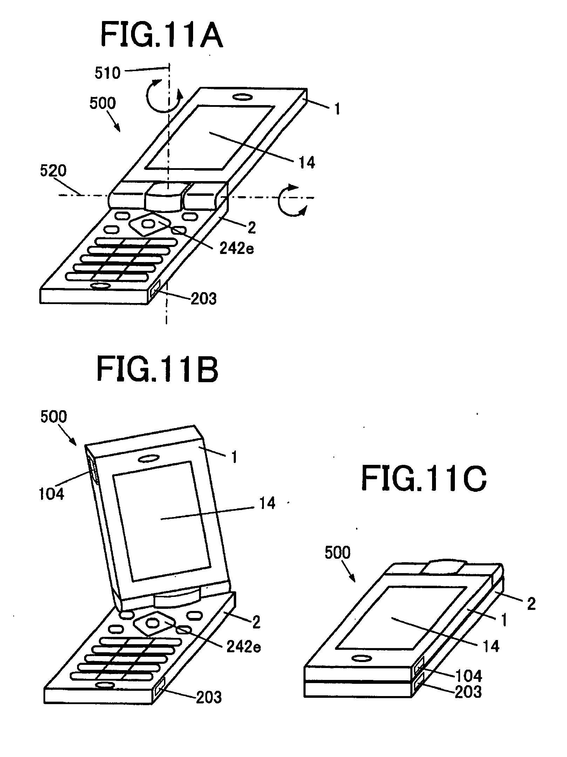

Further, it is possible to apply the present invention to a nail-clipper-type cellular phone 500 shown in FIGS. 11A to 11C. The nail-clipper-type cellular phone 500 is one in which the first casing 1 and the second casing 2 are coupled by the biaxial hinge similarly to the foldable cellular phone 100. However, contrary to the foldable cellular phone 100, the pivot shaft is connected to the second casing 2, and the opening and closing shaft is connected to the first casing 1. In other words, the nail-clipper-type cellular phone 500 is a cellular phone in which the first casing 1 rotates about the shaft center 510 of the pivot shaft, and in which the first casing 1 turns on the shaft center 520 of the opening and closing shaft as axis to open and close, as shown in FIGS. 11 A and 11B. Accordingly, it is possible to rotate the first casing 1 about the shaft center 510 of the pivot shaft from the closed position shown in FIG 11A to be in the opened position shown in FIG 11C. As shown in FIG 11A, the nail-clipper-type cellular phone 500 comprises a cross key 242e, similarly to the foldable cellular phone 100. Then, as shown in FIG 11C, side up-and-down key 104 and the side right-and-left key 203 having the same function as that of the cross key 242e are arranged to be positioned close to each other even in a position in which the cellular phone 500 is closed so that the display section 14 faces the outside. This makes it easy to operate the keys in the same way as the cross key 242e even in the position in which the cellular phone 500 is in the closed position.

In the cellular phones 300, 400 and 500, only the side up-and-down key 104 and the side right-and-left key 203 are provided on the side surface. However, a side determination key or the like may be provided.

Further, in the above-described embodiment, the present invention is applied to a cellular phones, but, the present invention can be applied not only to the cellular phone, but to other portable electronic devices including a PHS, a transceiver, a PDA, and a portable personal computer, etc.

Various embodiments and changes may be made thereunto without departing from the broad spirit and scope of the invention. The above-described embodiment is intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

## Claims

1. A portable electronic device including a first casing (1) having a display section (14) and a second casing having an operation section (24), in which the first casing can be positioned at the top of the operation section (24) of the second casing (2) in such a way that the display section is exposed, the portable electronic device being **characterized by** comprising:
besides operation keys provided on the operation section,
a first direction instruction key and a second direction instruction key (203a and 203B in FIG 8A/203a and 104a in FIG 8B), which are provided on one side surface of the second casing so as to be positioned close to each other; and
a third direction instruction key and a fourth direction instruction key (104a and 104b in FIG 8A/203b and 104b in FIG. 8B) which are provided on one side surface of the first casing so as to be positioned close to each other, **characterized in that**
the one side surface of the first casing on which the third and the fourth direction instruction keys are provided is positioned on a same side as the one side surface of the second casing when the fist casing is positioned at the top of the operation section of the second casing in such a way that the display section is exposed, and
the third and the fourth direction instruction keys are provided to be positioned close to the first and second direction instruction keys.

2. The portable electronic device according to claim 1, **characterized in that**
the first casing and the second casing are coupled via a biaxial hinge having two mutually-perpendicular axes so that the first casing can be folded relative to the second casing either in such a way that the display section faces to the outside or that the display section faces the second casing.

3. The portable electronic device according to claim 1, **characterized in that**
the first casing and the second casing are coupled via a sliding mechanism so that the first casing can slide on the second casing.

4. The portable electronic device according to claim 1, **characterized in that** the first casing and the second casing are coupled via a pivot shaft extending in the thickness direction of the casings so that the first casing can rotate in a plane relative to the second casing.

5. The portable electronic device according to any one of claims 1 to 4, **characterized in that**
the first direction instruction key (203a in FIG 8A) is a key for inputting an instruction of a direction, and the second direction instruction key (203b in FIG 8A) is a key for inputting an instruction of a direction that is opposite to the direction of the instruction of the third direction instruction key, and
the third direction instruction key (104a in FIG. 8A) is a key for inputting an instruction of a direction, and the fourth direction instruction key (104b in FIG. 8A) is a key for inputting an instruction of a direction that is opposite to the direction of the instruction of the first direction instruction key.

6. The portable electronic device according to any one of claims 1 to 4, **characterized in that**
the first direction instruction key (203a in FIG. 8B) is a key for inputting an instruction of a direction, and the third direction instruction key (203b in FIG. 8B), which is positioned diagonally opposite to the first direction instruction key, is a key for inputting an instruction of a direction that is opposite to the direction of the instruction of the first direction instruction key, and
the second direction instruction key (104a in FIG 8B) is a key for inputting an instruction of a direction, and the fourth direction instruction key (104b in FIG. 8B), which is positioned diagonally opposite to the second direction instruction key (104a in FIG 8B), is a key for inputting an instruction of a direction that is opposite to the direction of the instruction of the second direction instruction key.

7. The portable electronic device according to any one of claims 1 to 6, **characterized in that** key top sections of the first and the second direction instruction keys that are provided on the side surface of the second casing are integrated.

8. The portable electronic device according to any one of claims 1 to 7, **characterized in that** key top sections of the third and the fourth direction instruction keys provided on the side surface of the first casing are integrated.
